# EUROPEAN PATENT SPECIFICATION

(11) **EP 1 650 119 B1**
(45) Date of publication and mention of the grant of the patent: **18.04.2012**
(21) Application number: 05077304.3
(22) Date of filing: 10.10.2005
(51) Int. Cl.: B62J 7/04

(54) **Luggage carrier with a fastening assembly**
Gepäckträger mit einer Befestigungseinrichtung
Porte-bagages avec un dispositif de fixation

(30) Priority: 15.10.2004 NL 1027263
(43) Date of publication of application: 26.04.2006
(73) Proprietor: Batavus B.V., 8444 AR Heerenveen (NL)
(72) Inventor: Van der Wal, Marten, 8763 MR Parrega (NL); Van Berkum, Jan, 9051 GA Stiens (NL)
(74) Representative: Jansen, Cornelis Marinus

(56) References cited:
- EP-A1- 1 375 320
- DE-U1- 9 411 316
- US-A- 4 429 818
- US-A- 4 666 071

## Description

The invention relates to a fastening assembly for fastening a front part of a luggage carrier relative to a bicycle frame, and to a luggage carrier with such a fastening.

In general, luggage carriers for bicycles are chiefly universal luggage carriers having as most important parts a carrier rack for carrying a load, and supporting legs extending downward from the carrier rack for carrying the carrier rack relative to the frame of a bicycle of which the luggage carrier forms part.

For fastening the luggage carrier to the frame of a bicycle, the luggage carrier is generally provided, adjacent the operatively lower ends of the supporting legs, with a lower fastening provision in the form of, for instance, holes intended to be fastened, by means of a fastening member, to a bicycle frame adjacent (the location of) the rear axle of the bicycle, and with a fastening assembly which, operatively, extends forward from a position in the area of the front side of the carrier rack and is equipped with a provision for fastening to the frame.

As, generally, luggage carriers are universal in the sense that they can be fastened to various bicycle frames, the fastening assembly is, generally, adjustable as to the distance it bridges between the carrier rack and the bicycle. Also, the height, relative to the carrier rack, of the part of the fastening assembly which, in fastened condition, is located directly against the bicycle frame is, as a rule, adjustable.

It is known to utilize a fastening assembly with a bridging consisting of two juxtaposed bars. From Dutch patent application 9301007 and from European patent application 0 530 403 such luggage carriers are known, where the bars, each at the location of a hinge point, are adjustably hinged relative to the carrier rack while the hinge points are adjustable in longitudinal direction of the carrier rack. From German patent application 43 39 740 a luggage carrier is known where the bars, each at the location of a hinge point, are hingedly adjustable relative to the carrier rack while the positions of the hinge points are adjustable in longitudinal direction along the bars. From US patent 5 332 124 a luggage carrier is known where the bridging of the fastening assembly comprises two strips which are each adjustably fastened to the carrier rack about a fixed hinge point. With this luggage carrier, the distance between the carrier rack and the fastening to the bicycle frame is adjustable in that the strips are provided with slots in the longitudinal direction thereof, through which slots extend fastening elements for fastening to the bicycle frame.

A drawback of all these luggage carriers is that adjusting the distance between the carrier rack and the bicycle frame bridged by the fastening assembly is cumbersome in that it requires separate adjustment of two bars and, with the bars in the adjusted position, fixing four fastening elements.

From US patent 4 350 361 a luggage carrier is known where the bridging between the carrier rack and the bicycle frame is designed as a strip. Here, the length bridged by the strip is adjustable in that the strip is provided with a slot in longitudinal direction, through which extends a fastening element. A drawback of this luggage carrier is that the angle between the strip and the carrier rack is not adjustable.

Furthermore, US 4429818 discloses a luggage carrier according to the preamble of claim 1.

It is an object of the invention to provide a solution so that upon assembly, the fastening assembly is more easily adjustable as to the distance it bridges between the carrier rack and the bicycle frame, and as to the height relative to the carrier rack of the part of the fastening assembly which, in fastened condition, is located directly against the bicycle frame.

This object is achieved according to the invention by providing a luggage carrier according to claim 1.

By operating the tensioner for clamping the strip in the slot and relative to the sidepieces, both the setting of the length that is bridged and the setting of the height of the part of the fastening assembly to be fastened to the bicycle frame can be fixed in one single operation. As a result, when assembling the bicycle, the luggage carrier can be mounted considerably faster.

Special structural aspects of the invention are laid down in the dependent claims.

In the following, the invention is further illustrated and elucidated on the basis of an exemplary embodiment with reference to the drawing. In the drawing:
Fig. 1 shows a side view of a rear part of a bicycle frame on which an example of a luggage carrier according to the invention is mounted;

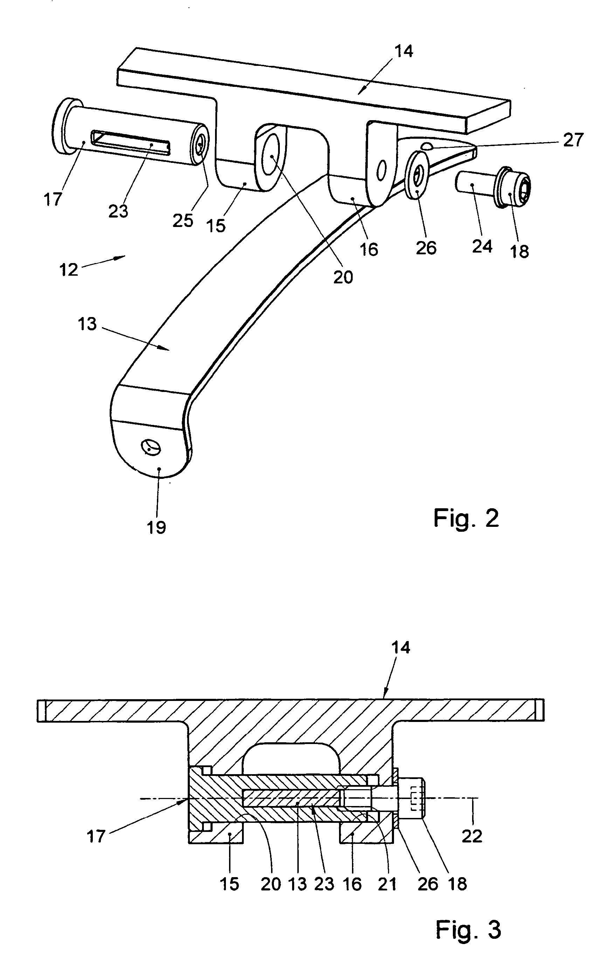

Fig. 2 shows an exploded perspective view of an example of a fastening assembly which forms part of the luggage carrier according to Fig. 1; and
Fig. 3 shows an elevational view in cross-section along the line III-III in Fig. 1.

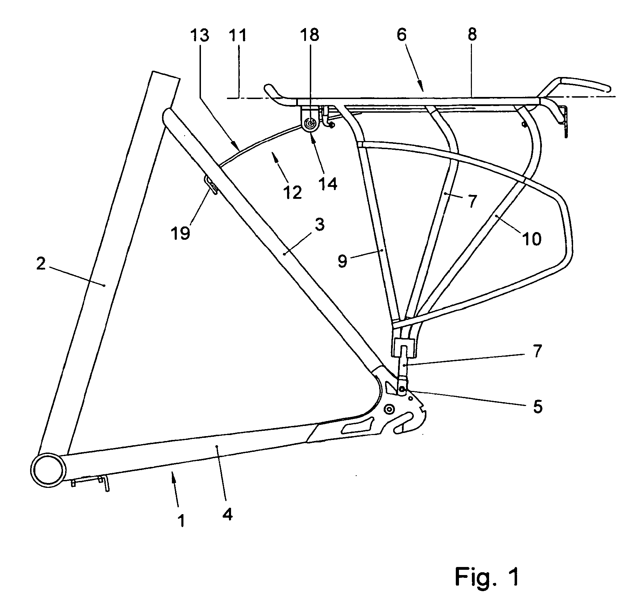

In Fig. 1, a rear part 1 of a frame of a bicycle is represented, comprising a seat tube 2 and uprights 3 and horizontals 4 of a rear fork. With bicycles of various models and, within a specific model, with bicycles of various frame sizes, in many cases, the lengths of the uprights 3 and horizontals 4 of the rear fork, the angle at which the uprights extend and the positions of a fastening provision on the uprights 3 (according to this example a hole where a bolt 5 extends) for fastening of supporting legs 7 of a luggage carrier 6 are different. The luggage carrier 6 is equipped with a carrier rack 8 for carrying a load, and supporting legs 7, 9, 10 which extend downwards from the carrier rack 8 for supporting the carrier rack 8 relative to the frame 1 of the bicycle. A lower fastening provision adjacent the operatively lower ends of the supporting legs 7 is designed as a hole in each of the supporting legs 7, through which, also, the bolt 5 extends. Other fastening provisions such as clamping straps can be utilized too.

In the fastened condition and when the bicycle is in the operative condition, standing on a flat basis, it is generally desired that a carrier plane 11 defined by the carrier rack 8 extends approximately horizontally. It is therefore desirable that the distance between the carrier rack 8 and the upright 3 of the bicycle frame be adjustable, so that, when mounted on mutually different bicycle frames, the carrier rack 8 can always be mounted such that the carrier plane 11 defined by the carrier rack 8 extends approximately horizontally.

Further, also, the position where fastening to the uprights 3 of the rear fork is possible is, in many cases, limited due to the presence of parts such as brakes and a lock and/or due to the position of a bridge part between the uprights 3, to which the luggage carrier is to be fastened.

The fastening assembly 12 represented in the drawings is designed for fastening a front part of the carrier rack 8 relative to the bicycle frame 1.

According to this example, the fastening assembly 12 is composed of a strip 13, a supporting element 14 with two sidepieces 15, 16, a carrier pin 17 and a tensioner in the form of a socket bolt 18.

According to this example, the strip 13 is manufactured from corrosion-resistant steel, so that a greater strength with compact construction is combined with good corrosion resistance and limited tendency to electrolytic corrosion of aluminum of the bicycle frame and the supporting element 14 which is in contact with the strip. However, the strip 13 can, in principle, also be manufactured from other materials such as aluminum, galvanized steel or composite material. Although the rigidity of the legs 7, 9, 10 prevents the sideways movability of the luggage carrier to an considerable extent, preferably, the strip 13 has a width of at least 15 to 20 mm to prevent torsion of the luggage carrier 6 relative to the fastening at the bolts 5. In vertical direction, the strip 13 needs not take up any actual load, but the strip needs to be prevented from bending at axial pressure load. To this end, when the strip 13 is designed from corrosion-resistant steel, a thickness of at least 2 mm is preferred. On the other hand, a thickness of no more than 3 mm is advantageous for a slender construction of the strip 13 and limitation of the dimensions of the carrier pin 17 through which the strip 13 extends.

In the area of an end 19, the strip 13 is provided with a fastening means, according to this example a hole for fastening the strip 13 to a bicycle frame 1. The fastening means can also be designed differently, for instance as a strap which clamps around the strip.

The supporting element 14 can be designed to be fastened to the carrier rack 8, in which case it is preferably pre-mounted on the carrier rack 8, or be designed as an integral part of the carrier rack.

The supporting sidepieces 15, 16 of the supporting element 14 extend at a mutual distance and are provided with mutually aligned holes 20, 21 in which the carrier pin 17 is bearing-mounted so as to be rotatably adjustable about a longitudinal axis 22 thereof. A passage 23 runs transverse to the longitudinal axis 22 and passes through the carrier pin 17. The strip 13 extends through this passage 23.

The tensioning bolt 18 is provided with a screw thread 24 which cooperates with an internal screw thread 25 of the carrier pin 17. A ring 26 is located between the head of the tensioning bolt 18 and the supporting element 14. When the tensioning bolt 18 is tightened, it pulls the carrier pin 17 closer, until a wall on the side of the slot 23 remote from the tensioning bolt 18 is pulled against the strip 13 and, in turn, pulls the strip 13 against the supporting sidepiece 16 which is located on the same side of the strip 13 as the tensioning bolt 18. Thus, the strip 13 is clamped relative to the sidepieces 15, 16. Thus, fixing the entire fastening assembly in the adjusted position, preferably after the strip 13 has been attached with its end 19 to the frame 1, only requires operation of a single fastening element 18.

Clamping the strip 13 relative to the carrier pin 17 and, directly or indirectly, relative to the supporting sidepieces 15, 16 can be achieved in various manners, while the tensioner can be directed axially or transversely to the longitudinal direction of the carrier pin 17. Since, as is the case with the fastening assembly according to the example shown, the tensioner 18 is designed for forcing the strip axially to one of the sidepieces 15, 16 and the strip in clamped condition is clamped in between a wall of the slot 23 and one of the sidepieces 16, the application of transverse forces to the carrier pin 17 and bending loads resulting therefrom are limited. The carrier pin 17 can therefore be of relatively light design.

The tensioner 18 is further designed for pulling the carrier pin 17 axially towards one of the sidepieces 16. This offers the advantage that the strip 13 is pulled against the supporting sidepiece 16 against which the tensioner 18 pushes off. Transmitting the clamping force from one supporting sidepiece 15 to the other supporting sidepiece 16 is therefore not necessary so that the supporting element 14 can also be of light design.

As the tensioner 18 and the carrier pin 17 have mutually cooperating screw thread sections 24, 25, it is not necessary to use separate insert nuts or the like, or conversely, to provide one of the holes in the supporting sidepieces 15, 16 of the supporting element 14 with screw thread, which is a relatively laborious operation.

The end of the strip 13 projecting beyond the tensioning bolt 18 is provided with a projection 27. The projection forms a lock preventing the luggage carrier from pivoting backwards when the tensioning bolt 18 is insufficiently tightened, or not tightened at all, or has shaken loose.

## Claims

1. A luggage carrier for a bicycle, comprising a carrier rack (8) for carrying a load, supporting legs (7, 9, 10) extending downwards from the carrier rack (8) for supporting the carrier rack (8) relative to a frame (1) of a bicycle, a lower fastening provision adjacent the operatively lower ends of at least two of the supporting legs (7), and a fastening assembly (12) for fastening a front part of the carrier rack (8) relative to the bicycle frame (1), wherein the fastening assembly (12) comprises:
a strip (13);
a fastening means in the area of an end of the strip (13) for fastening the strip (13) to the bicycle frame (1);
a pair of supporting sidepieces (15, 16) fastened to the carrier rack (8) or being an integral part of the carrier rack (8), which supporting sidepieces (15, 16) extend at a mutual distance and are provided with mutually aligned holes (20, 21);
a carrier pin (17) which is mounted in said holes, which has a longitudinal axis (22) and through which extends a passage (23), transverse to said longitudinal axis, through which passage extends the strip (13); and
a tensioner (18) for clamping the strip (13) tight in said passage (23) and relative to the sidepieces;
**characterized in that**, in assembled condition of the luggage carrier (6):
the fastening assembly (12) comprises one and only one of such a strip (13), one and only one of such a carrier pin (17), as well as one and only one of such a tensioner (18);
said one carrier pin (17) is bearing-mounted in said holes so as to be rotatably adjustable about said longitudinal axis (22); and
at least in a condition in which said one tensioner (18) is not thus clamping said one strip (13), said one strip is rotatably adjustable relative to the carrier rack (8) about said longitudinal axis (22).

2. A luggage carrier according to claim 1, wherein said one tensioner (18) is designed for forcing said one strip (13) axially towards one of the supporting sidepieces (15, 16), whereby in clamped condition, said one strip (13) is clamped tight between a wall of the passage (23) and one of the sidepieces (16).

3. A luggage carrier according to claim 2, wherein said one tensioner (18) is designed for pulling said one carrier pin (17) axially towards one of the supporting sidepieces (16).

4. A luggage carrier according to claim 2 or 3, wherein said one tensioner (18) and said one carrier pin (17) comprise mutually cooperating screw thread sections (24, 25).

## Patentansprüche

1. Gepäckträger für ein Fahrrad, umfassend ein Trägergestell (8) zum Tragen einer Last, Stützbeine (7, 9, 10) die sich von dem Trägergestell (8) nach unten erstrecken, zum Stützen des Trägergestells (8) relativ zu einem Rahmen (1) eines Fahrrads, eine untere Befestigungsvorrichtung gegenüber von den operativ unteren Enden von mindestens zwei der Stützbeine (7), und eine Befestigungseinrichtung (12) zum Befestigen eines vorderen Teils des Trägergestells (8) relativ zu dem Fahrradrahmen (1), wobei die Befestigungseinrichtung (12) folgendes umfasst:
einen Streifen (13);
ein Befestigungsmittel im Bereich von einem Ende des Streifens (13) zum Befestigen des Steifens (13) an dem Fahrradrahmen (1);
ein Paar von tragenden Seitenstücken (15, 16), die an dem Trägergestell (8) befestigt sind oder die einen integraler Teil des Trägergestells (8) sind, wobei die tragenden Seitenstücke (15, 16) in einem gegenseitigen Abstand verlaufen und mit gegenseitig ausgerichteten Löchern (20, 21) vorgesehen sind;
einen Mitnehmerstift (17), der in den Löchern montiert ist, der eine Längsachse (22) aufweist und durch den sich ein Durchgang (23) quer zu der Längsachse erstreckt, durch welchen Durchgang sich der Streifen (13) erstreckt; und
eine Spannvorrichtung (18) zum Festklemmen des Streifens (13) in dem Durchgang (23) und relativ zu den Seitenstücken;
**dadurch gekennzeichnet, dass**, in einem zusammengebauten Zustand des Gepäckträgers (6):
die Befestigungseinrichtung (12) einen und nur einen von einem solchen Streifen (13), einen und nur einen von einem solchen Mitnehmerstift (17) sowie eine und nur eine von einer solchen Spannvorrichtung (18) umfasst;
wobei der eine Mitnehmerstift (17) in den Löchern kugelgelagert ist, so dass er um die Längsachse (22) drehverstellbar ist; und
mindestens in einem Zustand, in dem die eine Spannvorrichtung (18) daher nicht den einen Streifen (13) festklemmt, der eine Streifen relativ zu dem Trägergestell (8) um die Längsachse (22) drehverstellbar ist.

2. Gepäckträger nach Anspruch 1, wobei die eine Spannvorrichtung (18) zum Drücken des einen Streifens (13) axial in Richtung von einem der tragenden Seitenstücke (15, 16) ausgelegt ist, wobei, in der festgeklemmten Position, der eine Streifen (13) zwischen einer Wand des Durchgangs (23) und einem der Seitenstücke (16) festgeklemmt ist.

3. Gepäckträger nach Anspruch 2, wobei die eine Spannvorrichtung (18) dazu ausgelegt ist, den einen Mitnehmerstift (17) axial in Richtung von einem der tragenden Seitenstücke (16) zu ziehen.

4. Gepäckträger nach Anspruch 2 oder 3, wobei die eine Spannvorrichtung (18) und der eine Mitnehmerstift (17) gegenseitig zusammenwirkende Schraubgewindeabschnitte (24, 25) umfassen.

## Revendications

1. Porte-bagages pour une bicyclette, comprenant un plateau porteur (8) permettant de porter une charge, des pattes de support (7, 9, 10) qui s'étendent vers le bas à partir du plateau porteur (8), afin de supporter le plateau porteur (8) par rapport à un cadre (1) d'une bicyclette, une réservation d'attache inférieure adjacente aux extrémités inférieures opérationnelles d'au moins deux des pattes de support (7), et un ensemble de fixation (12) permettant de fixer une partie avant du plateau porteur (8) par rapport au cadre de la bicyclette (1), dans lequel l'ensemble de fixation (12) comprend :
- une bande (13) ;
- un moyen de fixation dans la zone d'une extrémité de la bande (13) permettant de fixer la bande (13) sur le cadre de la bicyclette (1) ;
- une paire de pièces latérales de support (15, 16) fixées au plateau porteur (8) ou faisant partie intégrante du plateau porteur (8), lesquelles pièces latérales de support (15, 16) s'étendent à une distance l'une de l'autre et sont munies de trous (20, 21) alignés les uns par rapport aux autres ;
- une broche filetée (17) qui est montée dans lesdits trous, qui présente un axe longitudinal (22), et à travers laquelle s'étend un passage (23), transversalement au dit axe longitudinal, à travers lequel le passage prolonge la bande (13) ; et
- un tendeur (18) permettant de fixer la bande (13) et de la serrer dans ledit passage (23) et par rapport aux pièces latérales ;
**caractérisé en ce que**, dans l'état assemblé du porte-bagages (6) :
l'ensemble de fixation (12) comprend une et une seule bande (13) de ce type, une et une seule broche filetée (17) de ce type, ainsi que un et un seul tendeur (18) de ce type ;
ladite broche filetée (17) est assemblée par appui dans lesdits trous de manière à pouvoir être ajustée en rotation autour dudit axe longitudinal (22) ; et
au moins dans un état dans lequel ledit tendeur (18) ne fixe donc pas ladite bande (13), ladite bande peut être ajustée en rotation par rapport au plateau porteur (8) autour dudit axe longitudinal (22).

2. Porte-bagages selon la revendication 1, dans lequel ledit tendeur (18) est conçu pour forcer ladite bande (13) axialement vers l'une des pièces latérales de support (15, 16), grâce à quoi, en état fixé, ladite bande (13) est fixée et serrée entre une paroi du passage (23) et l'une des pièces latérales (16).

3. Porte-bagages selon la revendication 2, dans lequel ledit tendeur (18) est conçu pour tirer ladite broche filetée (17) axialement vers l'une des pièces latérales de support (16).

4. Porte-bagages selon la revendication 2 ou 3, dans lequel ledit tendeur (18) et ladite broche filetée (17) comprend des sections de filetage de vis qui coopèrent l'une avec l'autre (24, 25).
